(19) **Europäisches Patentamt / European Patent Office / Office européen des brevets**

(11) **EP 2 759 084 B1**

(12) **EUROPEAN PATENT SPECIFICATION**

(45) Date of publication and mention
of the grant of the patent:
**09.11.2016 Bulletin 2016/45**

(51) Int Cl.:
*H04J 11/00* (2006.01)   *H04B 7/26* (2006.01)
*H04B 1/713* (2011.01)   *H04L 5/00* (2006.01)
*H04L 1/18* (2006.01)   *H04L 5/14* (2006.01)
*H04W 72/04* (2009.01)

(21) Application number: **12834450.4**

(22) Date of filing: **20.09.2012**

(86) International application number:
**PCT/KR2012/007512**

(87) International publication number:
**WO 2013/042944 (28.03.2013 Gazette 2013/13)**

(54) **A METHOD FOR UL DATA TRANSMISSION IN WIRELESS COMMUNICATION SYSTEM**

VERFAHREN FÜR UL-DATENÜBERTRAGUNG IN EINEM DRAHTLOSEN
KOMMUNIKATIONSSYSTEM

PROCÉDÉ DE TRANSMISSION DE DONNÉES D'UL DANS UN SYSTÈME DE COMMUNICATION
SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2011 CN 201110288951**

(43) Date of publication of application:
**30.07.2014 Bulletin 2014/31**

(73) Proprietor: **Samsung Electronics Co., Ltd.
Suwon-si, Gyeonggi-do 443-742 (KR)**

(72) Inventors:
• **HE, Hong
Beijing 100125 (CN)**
• **LI, Yingyang
Beijing 100125 (CN)**
• **SUN, Chengjun
Beijing 100125 (CN)**

(74) Representative: **Gover, Richard Paul
HGF Limited
Saviour House
9 St Saviourgate
York YO1 8NQ (GB)**

(56) References cited:
**CN-A- 102 075 949     KR-A- 20110 010 683
KR-A- 20110 010 683     US-A1- 2010 085 956
US-A1- 2010 085 956     US-A1- 2010 189 032
US-A1- 2010 189 032     US-A1- 2010 329 220
US-A1- 2010 329 220     US-A1- 2011 170 499**

• **CATT: "HARQ and Cross-carrier Scheduling for
Different TDD Configurations", 3GPP DRAFT;
R2-112798, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. RAN
WG2, no. Barcelona, Spain; 20110509, 3 May 2011
(2011-05-03), XP050495238, [retrieved on
2011-05-03]**

**Description**

**Technical Field**

The present invention relates to wireless communication technologies, and more particularly, to a method for UL (Uplink) data transmission in a wireless communication system.

**Background Art**

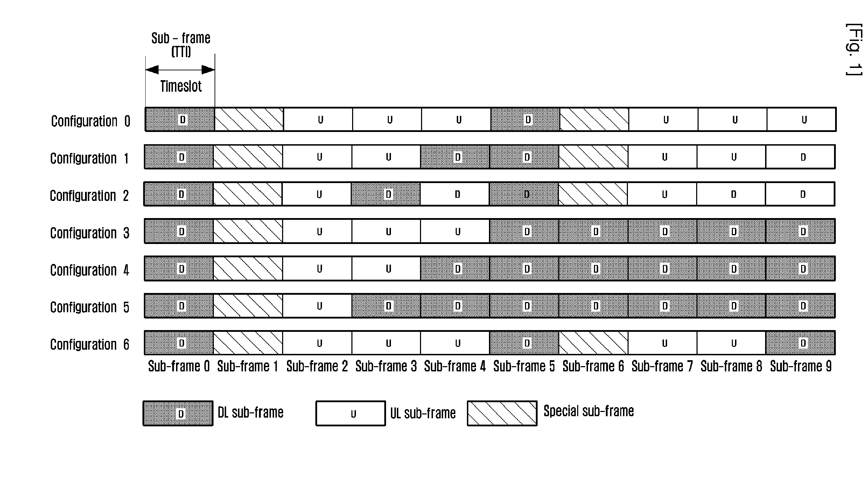

In the existing Long Term Evolution (LTE) standard of the 3rd Generation Partnership Project (3GPP), a DL (Downlink) transmission technology is based on Orthogonal Frequency Division Multiplexing (OFDM) while a UL transmission technology is based on Single-Carrier Frequency Division Multiple Access (SC-FDMA). The LTE system uses two types of frame structure, i.e., frame structure type 1 adopting Frequency-Division Duplex (FDD) and frame structure type 2 adopting Time Division Duplex (TDD). Frame structure type 2 includes seven kinds of different frame structure configurations. The proportion of DL sub-frames in each kind of frame structure configuration is fixed, ranging from 40% to 90%. As shown in figure 1, sub-frames identified with "D" are DL sub-frames, sub-frames identified with "U" are UL sub-frames and sub-frames identified with "slashes" are special sub-frames.

The DL data sub-frames Physical Downlink Shared Channel (PDSCH) are used for transmitting DL data, and Acknowledgement (ACK)/ Negative Acknowledgement (NACK) information corresponding to the PDSCH is fed back with Physical Uplink Control Channel (PUCCH) of UL control sub-frames. Downlink Control Information (DCI) corresponding to the DL data is borne by a CCE (Control Channel Element) aggregation on a Physical Downlink Control Channel (PDCCH). Existing mapping method of ACK/NACK corresponding to the PDSCH include an implicit mapping method and an explicit mapping method. Where, the implicit mapping method includes:

First, positions of Physical Uplink Control Channel (PUCCH) sub-frames for feeding back the ACK/NACK information are determined according to positions of PDSCH sub-frames. Then, specific resources positions of the ACK/NACK information which is fed back in the corresponding PUCCH sub-frames are determined according to a position of the first CCE in the CCE aggregation of the DCI information bearing the DL data. The above implicit mapping method directly indicates the resource positions of the ACK/NACK without extra information. Thus, overheads are saved and resources utilization rate is enhanced.

In order to further meet the requirement of enhancing data speed, a conception of Carrier Aggregation (CA) is introduced into version 10 (Rel-10) of the LTE. Multiple continuous or discontinuous bandwidth carriers are aggregated into system bandwidth up to 100 Mhz. Specifically, in the LTE Rel-10 system, the UE may be configured with multiple Component Carriers (CC)s. An evolved Node B (eNB) notifies the UE of a number of a Primary CC (PCC) and numbers of aggregated Secondary CCs (SCC)s through high-level signaling. At the same time, along with the development of actual network deployment and system operations, in the future evolution of the Time Division (TD)-LTE system, the problem that different CCs adopts different sub-frame configurations becomes an important problem needing to be taken into account in the evolution of the TD-LTE system.

When the multiple CCs configured for the UE are in different frequency bands, and the frame structure configuration of at least one CC is different from the frame structure of other CCs, how to design a timing relationship between PDSCH of a DL data sub-frame and UL control information, and more specifically how to design the timing relationship between the PDSCH and the ACK / NACK information becomes a key issue to be solved when the carrier aggregation technologies of different bands adopt different frame structure configurations.

At present, on the basis of rational technical analysis, there are mainly two potential technical routes.

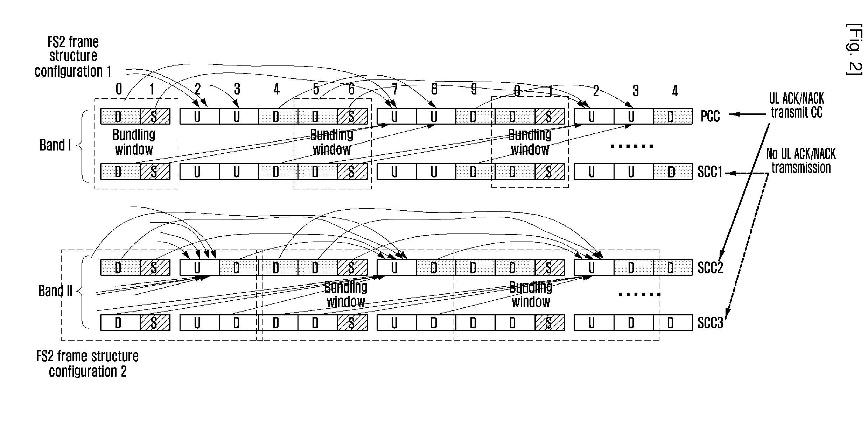

The first method for feeding back the ACK/NACK is on an assumption that all UEs supporting a carrier aggregation technology of different bands and characteristics of different frame structure configurations include at least two Power Amplifiers (PA)s and Radio frequency (RF) circuits. When all CCs of the UE are in two different bands and the frame structure configurations in any different band are the same, while the frame structure in different bands is different, the eNB designates a CC for feeding back ACK/NACK information for each UE in each band through the high-level signaling. Each band continues to use an existing timing relationship between the PDSCH and UL ACK/NACK in its band according to its different frame structure configurations. As shown in figure 2, the problem of the first method lies in that the costs of the Rel-11 terminals are greatly enhanced, and the realization and markets of the Rel-11 products are restricted. Meanwhile, how to support the power control of cell edge users with limited power and UL ACK / NACK is also a problem to be solved by the first method.

As for the problems of the first method, the second method merely sending the UL ACK/NACK information on a single PCC to ensure that even low-end users with only one PA in the Rel-11 system still can benefit from the carrier aggregation technology of different bands with different frame structure configurations, and continue to use the existing power control mechanism of the UL ACK/NACK information.

In the second method, the typical method is designing a new timing relationship between the PDSCH and UL ACK/NACK. However, a scheduler needs to use a new scheduling policy for allocating and scheduling resources, i.e., the method needs to change the existing scheduler algorithms.

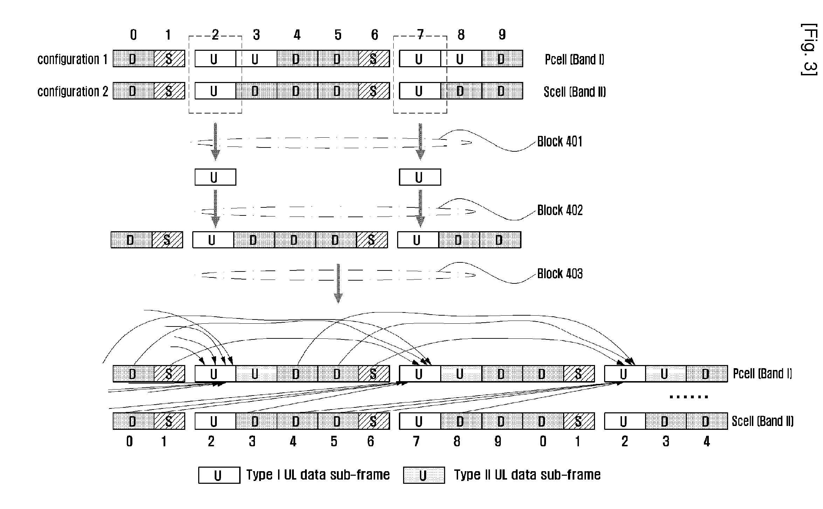

The second method further includes an improved method: The UE determines positions of public UL sub-frames according to the frame structure configurations of configured CCs, searches for and determines a unique and backward compatible frame structure configuration according to the positions of the public UL sub-frames, and at last, maps the specific timing relationship between the PDSCH and UL ACK/NACK out one by one on the PCC configured by the UE according to the determined backward compatible frame structure configuration. The UE uses the above method for effectively supporting the carrier aggregation of Bands of different frame structure configurations and implementing coexistence and performance optimization of different communication systems without limiting the number of amplifiers of the UE. As shown in figure 3, when the UE configures two different CCs on two different frequency bands, one of the CC is the PCC adopting frame structure configuration 1, and the other is SCC adopting frame structure configuration 2. The UE decides to feed back the ACK/NACK information corresponding to the PDSCH on the PCC and SCCs adopting the timing relationship between the PDSCH and ACK/NACK defined by frame structure configuration 2 according to the above method.

For the convenience of description, UL sub-frames in any wireless frame are divided into two categories according to whether the ACK/NACK information of Rel-11 is borne. One of the categories specifically indicates UL sub-frames for transmitting the ACK/NACK information of different frame structure configurations on different CCs, and this category is called type I UL sub-frames, and the other UL sub-frames are called type II UL sub-frames. Here, Rel-11 ACK/NACK specifically indicates the ACK/NACK information generated when different CCs adopt different frame structure configurations. More specifically, as shown in figure 3, when the cell adopts frame structure 1 on the PCC while adopts frame structure 2 on the SCC, sub-frame 2 and sub-frame 7 in any wireless frame are type I UL data sub-frames, while both sub-frame 3 and sub-frame 8 are type II UL data sub-frames.

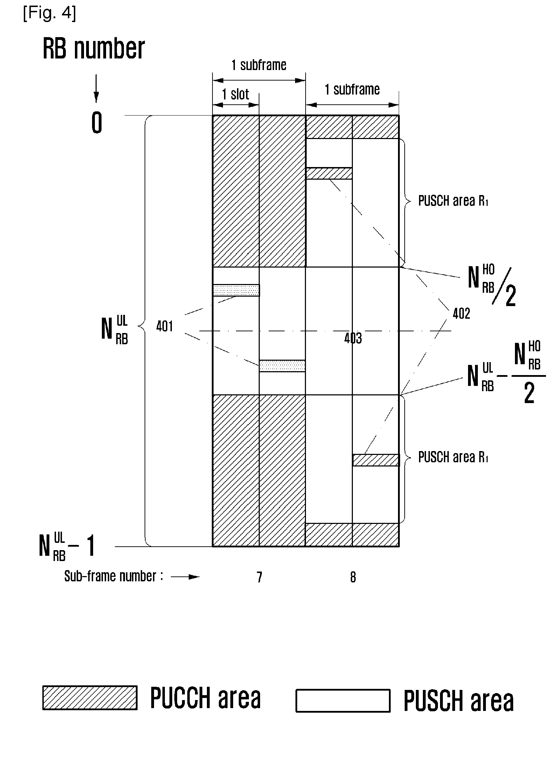

As for the wireless frame including the type I and type II UL data sub-frames, the ACK/NACK loads of the type I UL data sub-frames are different from those of the type II UL data sub-frames, resulting in that the UL overheads of the two kinds of UL data sub-frames are different. In the type II UL data sub-frames, since the ACK/NACK causes a relatively light load, thus much more resources are used for transmitting the UL data. That is to say, compared with the type I UL sub-frames, the PUSCH of the type II UL sub-frames occupies much more resources. As shown in figure 4, the loads of the ACK/NACK of sub-frames 7 and sub-frame 8 are different, resulting in that the UL overheads of two continuous sub-frames are different. Specifically, in sub-frame 8, the ACK/NACK causes a relatively light load, the PUSCH R1 area taken as PUSCH is used for transmitting the UL data, while in sub-frame 7, the ACK/NACK causes a relatively heavy load, the frequency domain which is identical with the PUSCH R1 area in sub-frame 8 is taken as the PUCCH and used for transmitting the control information. At present, in the UL data transmission of the PUSCH, a frequency hopping method may be used for transmission according to system settings. In sub-frame 8, the PUSCH R1 area is also taken as the PUSCH. The frequency domain resources occupied by the UL data may fall into area 403 in figure 4, and may collide with the frequency resources occupied by other UL data in this area after the UL data in this area is processed with the frequency hopping. That is to say, PUSCH402 after the frequency hopping processing may collide with PUSCH401.

CN-102075949-A discloses a CA technology-based data transmission method and a CA technology-based data transmission device, which are used for ensuring the normal operation of user terminals when a plurality of cells in which the user terminals supporting CA technology aggregate have different kinds of time division duplex uplink/downlink (TDD UL/DL) configuration. In the method, a TDD UL/DL configuration set concept is introduced, an especial cell (Ecell) concept is introduced for each TDD UL/DL configuration set, each TDD UL/DL configuration set may contain one or more cells and has one Ecell which may have all or part of functions of a primary cell (Pcell), the user terminals can perform data communication with the base station through TDD UL/DL configuration information and the corresponding Ecells, and thus, the method can ensure the user terminals operate normally when the plurality of cells in which the user terminals aggregate have different kinds of TDD UL/DL configuration and ensure the normal operation of the system.

Catt : "HARQ and Cross-carrier Scheduling for Different TOO Configurations", 3GPP Draft; R2-112798, 3rd Generation Partnership Project (3GPP), Mobile Competence Centre; 650, Route Des Lucioles ; F-06921 Sophia-Antipolis Cedex; France, vol. RAN WG2, no. Barcelona, Spain; 3 May 2011. This document discusses the issues of HARQ and cross-carrier scheduling for different TDD configurations on different bands in the context of carrier aggregation.

US-2011/170499-A1 discloses methods and apparatuses for preventing physical hybrid automatic repeat request (HARQ) indicator channel (PHICH) ambiguities or collisions, for example, in a multi-carrier system or when transmitting multiple streams over multiple antennas, are described. Methods may include dividing resources or groups among multiple component carriers (CCs), using and assigning unused or vacant resources to CCs, forcing usage of adaptive HARQ processes in specified scenarios, setting a value for the cyclic shift of the corresponding uplink demodulation reference signals (DMRS) to a previous value for semi-persistent scheduling, and assigning a different first resource block for semi-persistent scheduling uplink resources and random access response grants for multiple CCs.

US-2010/329220-A1 discloses a method of transmitting uplink data in a wireless communication system is provided. The method includes receiving an uplink grant and transmitting uplink data through a resource block which is indicated by the resource block index in a control region of a slot indicated by the slot indicator in the subframe.

KR-2011/0010683-A discloses a terminal arranged to receive an uplink resource allocation from a base station. The terminal transmits an uplink transfer block in a PUSCH (Physical Uplink Shared Channel) by uplink resource allocation The uplink resource allocation indicates RB which is allocated in a subframe including a plurality of RB (Resource Block). The subframe a PUCCH (Physical Uplink Control Channel) at least one PUCCH domain and a plurality of PUSCH domains The PUCCH domain is arranged between PUSCH domains.

US-2010/085956-A1 discloses a method for processing data in a wireless communication system is provided. The method includes receiving a first uplink scheduling command indicating a first radio resource, receiving a second uplink scheduling command indicating a second radio resource through a random access response, and stopping a procedure associated with the second uplink scheduling command when the first radio resource and the second radio resource collide.

US-2010/189032-A1 discloses techniques for performing frequency hopping in a wireless network are described. In an aspect, frequency hopping may be performed based on both cell identity (ID) and system time information. In one design, a user equipment (UE) may determine a cell ID of a cell and may obtain system time information for the cell. The UE may determine resources to use for transmission with frequency hopping based on the cell ID and the system time information. In one design, the UE may initialize a PN generator in each radio frame with an initial value determined based on the cell ID and a system frame number (SFN) for the radio frame. The UE may determine the resources to use for transmission based on a hopping function, a mirroring function, and a PN sequence from the PN generator. The UE may send a transmission on the resources to the cell.

## Disclosure of Invention

### Technical Problem

The present invention provides a UL data transmission method in a wireless communication system, to ensure the transmission of the PUSCH without collision while ensuring the obtaining the frequency domain diversity gain with the frequency hopping .

### Solution to Problem

According to a first aspect of the present invention there is provided a method for uplink, UL, data transmission in a wireless communication system, the method comprising: determining, by the UE, UL virtual resources allocated to the UE by an Evolved Node B, eNB, according to Downlink Control Information, DCI, used for scheduling UL physical resources sent from the eNB to the UE, wherein a first component carriers, CC, and a second CC having different frame structure configurations are configured for the UE; determining, by the UE, the UL physical resources used for transmitting the UL data after frequency hopping processing in a preset frequency domain when determining that the UL data needs to be processed with frequency hopping processing according to the DCI, if the UL virtual resources allocated to the UE are located at UL sub-frames in a non-aggregation K of any wireless frame, and are located at the preset frequency domain; and transmitting, by the UE, the UL data to the eNB utilizing the determined UL physical resources which are processed with the frequency hopping processing and used for transmitting the UL data; wherein an aggregation K is formed in a type I UL sub-frame which indicates that the first CC and the second CC each have UL sub-frames in same sub-frame number, and a non-aggregation K is formed in a type II UL sub-frame which indicates that the first CC has an UL sub-frame and the second CC has a DL sub-frame in same sub-frame number; and wherein the preset frequency domain is an overlapping area of a Physical Uplink Control Channel, PUCCH, area of UL sub-frames in the aggregation K and a Physical Uplink Shared Channel, PUSCH, area of sub-frames in the non-aggregation K.

According to a second aspect of the present invention there is provided a user equipment, UE, for uplink, UL, data transmission in a wireless communication system, the UE being configured to: determine UL virtual resources allocated to the UE by an Evolved Node B, eNB, according to Downlink Control Information, DCI, used for scheduling UL physical resources sent from the eNB to the UE, wherein a first component carrier, CC, and a second CC having different frame structure configurations are configured for the UE; determine the UL physical resources used for transmitting the UL data after frequency hopping processing in a preset frequency domain when determining that the UL data needs to be processed with frequency hopping processing according to the DCI, if the UL virtual resources allocated to the UE are located at UL sub-frames in a non-aggregation K of any wireless frame, and are located at the preset frequency domain; and transmit the UL data to the eNB utilizing the determined UL physical resources which are processed with the frequency hopping processing and used for transmitting the UL data; wherein an aggregation K is formed in a type I UL sub-frame which indicates that the first CC and the second CC each have UL sub-frames in same sub-frame number, and a non-aggregation K is formed in a type II UL sub-frame which indicates that the first CC has an UL sub-frame and the second CC has a DL sub-frame in same sub-frame number; and wherein the preset frequency domain is an overlapping area of a Physical Uplink Control Channel, PUCCH, area of UL sub-frames in the aggregation K and a Physical Uplink Shared Channel, PUSCH, area of sub-frames in the non-aggregation K.

**Advantageous Effects of Invention**

According to certain embodiments of the present invention, a UL data transmission method in a wireless communication system, to ensure the transmission of the PUSCH without collision while ensuring the obtaining the frequency domain diversity gain with the frequency hopping is provided.

Brief Description of Drawings

Figure 1 is a figure illustrating configurations of frame structure of an existing TD-LTE system;
Figure 2 is a schematic diagram illustrating a first method for feeding back ACK/NACK information;
Figure 3 is a schematic diagram illustrating an improved method of a second method for feeding back ACK/NACK;
Figure 4 illustrates descriptions of problems in the improved method of the second method for feeding back ACK/NACK;
Figure 5 is a whole flow chart illustrating a UL data transmission method in accordance with an embodiment of the present invention; and
Figure 6 is a schematic diagram illustrating mapping of resources used for transmitting UL data in accordance with an embodiment of the present invention.

**Mode for the Invention**

The present invention is further described in detail hereinafter with reference to the accompanying drawings to make the objective, technical solution and merits thereof more apparent.

The basic idea of the present invention is still mapping resource blocks in a PUSCH R1 area of type II UL subframes into the PUSCH R1 area after frequency hopping processing to avoid the collision with the PUSCH of non-R1 area.

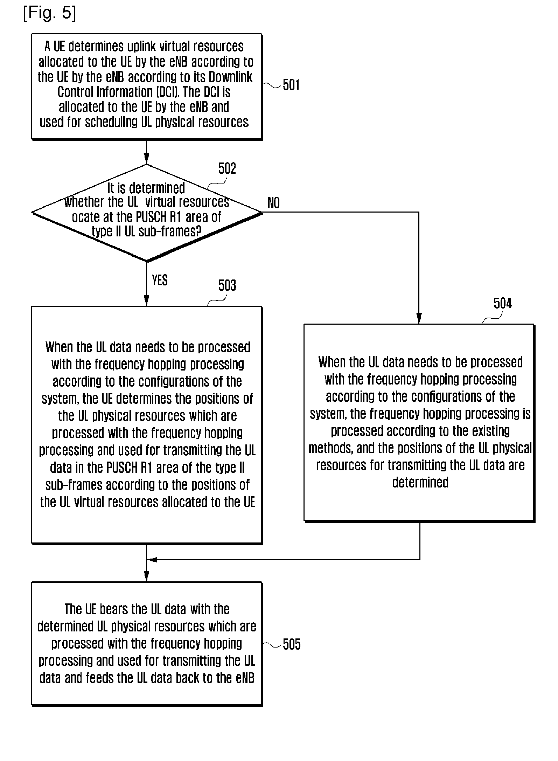

Figure 5 is a whole flow chart illustrating a UL data transmission method in accordance with an embodiment of the present invention. As for the UE configured with CCs which are configured with multiple different frame structure configurations, the UL data is transmitted adopting the method shown in figure 5. Specifically, as shown in figure 5, the method includes:

Block 501: A UE determines uplink virtual resources allocated to the UE by the eNB according to its Downlink Control Information (DCI). The DCI is allocated to the UE by the eNB and used for scheduling UL physical resources.

The processing of this block is identical with that in the prior art.

Block 502: It is determined whether the UL virtual resources allocated to the UE locate at the PUSCH R1 area of type II UL sub-frames. Block 503 is executed is yes; otherwise block 504 is executed.

As stated in the background of the invention, type II UL sub-frames refer to UL sub-frames except for type I UL sub-frames. While type I UL sub-frames refer to UL sub-frames for transmitting ACK/NACK information of different frame structure configurations of different CCs. Therefore, if an aggregation K is formed with the UL sub-frames for transmitting ACK/NACK information of different frame structure configurations of different CCs, type I UL sub-frames refer to UL subframes in the aggregation K, while type II UL sub-frames refer to UL sub-frames which are not in the aggregation K.

Because the PUSCH R1 area for transmitting the UL data is added to the PUSCH in the type II UL sub-frames, physical resources, after the frequency hopping processing, in the added PUSCH R1 area may collide with resource blocks and physical resource blocks after the frequency hopping processing in the non-R1 area. Therefore, the UL virtual resources in the PUSCH R1 area in the type II UL sub-frames allocated to the UE by the system need to be processed in block 503 to avoid the collision. While, other UL virtual resources allocated to the UE by the system need to be processed according to an existing method in block 504.

As shown in figure 4, the PUSCH R1 area is an overlapping area of the PUCCH of type I UL sub-frames and the PUSCH of type II UL sub-frames. When determining whether the UL virtual resources allocated to the UE locate at the PUSCH R1 area of type II UL sub-frames, the determination of whether allocated UL virtual resources locate at the type II UL sub-frames may be performed according to an existing method, and the method for determining whether the allocated UL virtual resources locate at the PUSCH R1 area includes determining whether the UL virtual resource block m allocated to the UE satisfy the following condition:

$$m < N \frac{HO}{RB}/2 \quad (1)$$

or

$$m > N \frac{UL}{RB} - \frac{N \frac{HO}{RB}}{2} \quad (2) \quad .$$

$N \frac{UL}{RB}$ is a total number of Resource Blocks (RB)s in the UL system band, and $N \frac{HO}{RB}$ is a frequency hopping offset issued by the system.

If any of the above conditions is satisfied, it is determined that the UL virtual resources allocated to the UE locate at the PUSCH R1 area; otherwise, it is determined that the UL virtual resources allocated to the UE do not locate at the PUSCH R1 area. It can be seen from figure 4 that actually, the PUSCH R1 area not only refers to an area of

$$m < N \frac{HO}{RB}/2 \text{ or } m > N \frac{UL}{RB} - \frac{N \frac{HO}{RB}}{2} \quad . \quad$$ However, other PUCCH resources in this area are not scheduled by the system for the UE. Therefore, resources which are scheduled for the UE by the system and satisfy one of the above conditions must be those in the PUSCH R1 area.

Block 503: When the UL data needs to be processed with the frequency hopping processing according to the configuration of the system, the UE determines the positions of the UL physical resources which are processed with the frequency hopping processing and used for transmitting the UL data in the PUSCH R1 area of the type II sub-frames according to the positions of the UL virtual resources allocated to the UE.

As long as the positions of the UL physical resources which are processed with the frequency hopping processing and used for transmitting the UL data are still in the PUSCH R1 area of the type II sub-frames, the methods of the frequency hopping processing may be configured as needed. Preferably, to simply the processing of the UE, a mirroring frequency hopping mode, i.e. $n \frac{s2}{PRB}(i): n \frac{s2}{PRB}(i) = N \frac{UL}{RB} - 1 - n \frac{s1}{PRB}(i)$ may be adopted to determine the positions of the UL physical resources after the frequency hopping processing. $n \frac{s1}{PRB}(i)$ is a

position of a UL physical resource allocated to the UE. $N \frac{UL}{RB}$ is the total number of RBs in the UL system bandwidth, and i is the number of the UL virtual resources allocated to the UE. This number is the number of a virtual RB allocated to the UE in all the virtual RBs allocated to the UE.

Block 504: When the UL data needs to be processed with the frequency hopping processing according to the configurations of the system, the frequency hopping processing is processed according to the existing methods, and the positions of the UL physical resources for transmitting the UL data are determined, and block 505 is executed.

Block 505: The UE bears the UL data with the determined UL physical resources which are processed with the frequency hopping processing and used for transmitting the UL data and feeds the UL data back to the eNB.

The processing of blocks 504 and 505 is identical with the conventional method and is not repeated here.

With the above processing of the embodiment of the present invention, the PUSCH R1 area of the type II UL sub-frames may bearer the UL data without collision, and the frequency-domain diversity gain may be obtained with the frequency hopping.

Next, the realization of the present invention is described through specific embodiments.

In this embodiment of the present invention, the system is configured with two carrier elements CCs, respectively numbered $CC_0$ and $CC_1$. The bandwidth of each carrier element is $BW_i$. It is assumed that $BW_0 = BW_1 = 10MHz$, i.e. each CC includes 50 Physical Resource Blocks (PRB)s, and assumed that $CC_0$ adopts frame structure configuration 1 while $CC_1$ adopts frame structure configuration 2.

The method in this embodiment includes:

Block A: eNB broadcasts relevant parameters of UL frequency hopping through system information.

The parameters of this embodiment are configured as follows: this cell adopts the intra-sub-frame frequency hopping, while the offset of the frequency hopping of the PUSCH is 30 PRBs, i.e. $N_{RB}^{HO} = 30$.

Block B: eNB allocates the UL virtual resources of the sub-frame 2 and sub-frame 3 for the UE for transmitting the UL data.

The number of the virtual resource blocks allocated for the UE through DCI on sub-frame 2 is {26, 27, 28} (Note: the allocated resource blocks in DCI is {11, 12, 13}). The two bit value in the frequency hopping domain of DCI is "10", and the frequency hopping processing needs to be performed. The number of the virtual resource blocks allocated for the UE through DCI on sub-frame 3 is {7, 8, 9}. The two bit value in the frequency hopping domain of DCI is "01", and the frequency hopping processing needs to be performed.

Block C: The UE determines the UL physical resources used for transmitting the UL data according to the allocated UL virtual resources.

$$( \lfloor N_{RB}^{PUSCH}/2 \rfloor + \{26\text{-}15, 27\text{-}15, 28\text{-}15\}) \bmod N_{RB}^{PUSCH} + N_{RB}^{HO}/2 = \{16, 17, 18\}$$

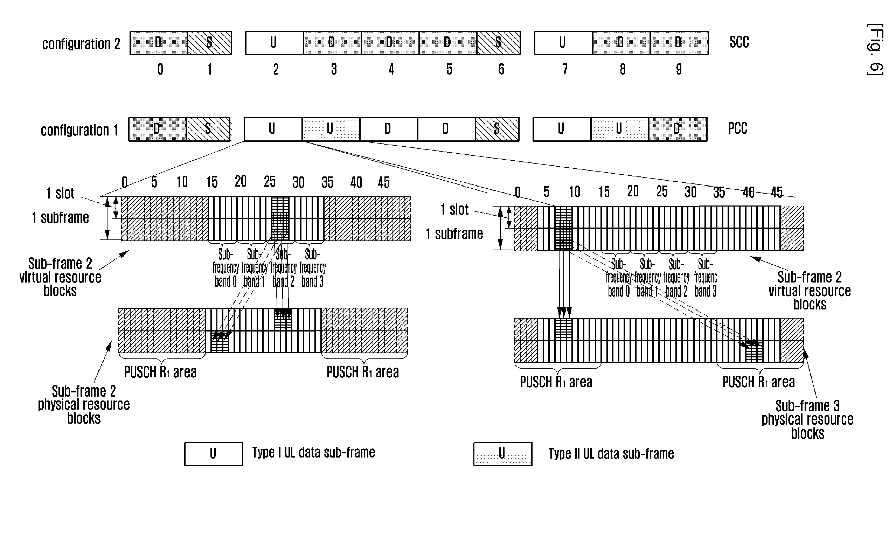

Since sub-frame 2 belongs to the type I sub-frame, the UL physical resources corresponding to the UL virtual resources allocated on sub-frame 2 are determined according to the conventional method. Specifically, as shown in figure 6, the UE transmits the UL data on the physical resource blocks, numbered {26, 27, 28}, at the first timeslot, while the UE maps the UL physical resources at the second timeslot adopting the conventional PUSCH frequency hopping method, i.e.

$$( \lfloor N_{RB}^{PUSCH}/2 \rfloor + \{26\text{-}15, 27\text{-}15, 28\text{-}15\}) \bmod N_{RB}^{PUSCH} + N_{RB}^{HO}/2 = \{16, 17, 18\}$$

according to the existing PUSCH frequency hopping mode at the second timeslot of the same type I UL sub-frame.

In figure 6, in order to compare with the PUSCH $R_1$ area in sub-frame 3, the corresponding area in sub-frame 2 is denoted as PUSCH $R_1$ area. However, actually, the corresponding area in sub-frame 2 is the PUCCH area.

For sub-frame 3, it is determined that sub-frame 3 belongs to the type II UL sub-frame according to the frame structure configurations of CC0 and CC1. It is further determined whether the UL virtual resources allocated to sub-frame 3 locate at the PUSCH R1 area. Apparently, the UL resource blocks, numbered {7, 8, 9} satisfy the condition

$$m < N_{RB}^{HO}/2.$$

Therefore, if the UL virtual resources locate at the PUSCH $R_1$ area, the frequency hopping needs to be performed according to the method of the present invention. Specifically, the frequency hopping domain is "01", the UL physical resource blocks utilized by the UE in sub-frame 3 is shown in figure 6.

Timeslot 0: the UL resource blocks allocated using the DCI, i.e. the resource blocks {7, 8, 9}.

Timeslot 1:

$$n_{PRB}^{s2}(i) = N_{RB}^{UL} - 1 - n_{PRB}^{s1}(i) = 50 - 1 - \{7, 8, 9\} = \{40, 41, 42\}$$

Block D: The UE transmits the UL data utilizing the mapped-out physical resource blocks.

At this point, the method in embodiments of the present invention is finished.

It can be seen from the description of the embodiments of the present invention that the UE may use the above method to maximize of the frequency diversity gain and further enhance the performances of the PUSCH while avoiding the collision with the PUSCH channel resources of the UE which is (Rel-8/9/10).

**Claims**

1. A method for uplink, UL, data transmission in a wireless communication system, the method comprising:

determining (501), by the UE, UL virtual resources allocated to the UE by an Evolved Node B, eNB, according to Downlink Control Information, DCI, used for scheduling UL physical resources sent from the eNB to the UE, wherein a first component carriers, CC, and a second CC having different frame structure configurations are configured for the UE;

determining (503, 504), by the UE, the UL physical resources used for transmitting the UL data after frequency hopping processing in a preset frequency domain when determining (502) that the UL data needs to be processed with frequency hopping processing according to the DCI, if the UL virtual resources allocated to the UE are located at UL sub-frames in a non-aggregation K of any wireless frame, and are located at the preset frequency domain; and

transmitting (505), by the UE, the UL data to the eNB utilizing the determined UL physical resources which are processed with the frequency hopping processing and used for transmitting the UL data;

wherein an aggregation K is formed in a type I UL sub-frame which indicates that the first CC and the second CC each have UL sub-frames in same sub-frame number, and a non-aggregation K is formed in a type II UL sub-frame which indicates that the first CC has an UL sub-frame and the second CC has a DL sub-frame in same sub-frame number; and

wherein the preset frequency domain is an overlapping area of a Physical Uplink Control Channel, PUCCH, area of UL sub-frames in the aggregation K and a Physical Uplink Shared Channel, PUSCH, area of sub-frames in the non-aggregation K.

2. The method of claim 1, further comprising determining (502) whether the UL virtual resources allocated to the UE are located at the preset frequency domain by:

determining whether a UL virtual resource block m allocated to the UE satisfies a condition $m < N_{RB}^{HO}/2$ or

$$m > N_{RB}^{UL} - \frac{N_{RB}^{HO}}{2}$$ and ;

determining that the UL virtual resources allocated to the UE locate at the preset frequency domain if the UL virtual resource block m satisfies the condition; otherwise determining that the UL virtual resources allocated to the UE do not locate at the preset frequency domain;

wherein $N_{RB}^{UL}$ is a total number of Resource Blocks, RBs, in a UL system bandwidth, $N_{RB}^{HO}$ is an offset of frequency hopping issued by the system, and m is a physical resource block number of the UL virtual resource block.

3. The method of claim 1, wherein determining, by the UE, the UL physical resources used for transmitting the UL data after the frequency hopping processing in the preset frequency domain comprises:

$$n_{PRB}^{s2}(i) = N_{RB}^{UL} - 1 - n_{PRB}^{s1}(i),$$

wherein $n_{PRB}^{s2}(i)$ is a position of a UL physical resource which is used for transmitting the UL data after the frequency hopping processing, $n_{PRB}^{s1}(i)$ is a position of a UL virtual resource allocated to the UE, $N_{RB}^{UL}$ is a total number of RBs in the UL system bandwidth, and i is a number of the UL virtual resources allocated to the UE.

4. A user equipment, UE, for uplink, UL, data transmission in a wireless communication system, the UE being configured to:

determine (501) UL virtual resources allocated to the UE by an Evolved Node B, eNB, according to Downlink Control Information, DCI, used for scheduling UL physical resources sent from the eNB to the UE, wherein a first component carrier, CC, and a second CC having different frame structure configurations are configured for the UE;

determine (503, 504) the UL physical resources used for transmitting the UL data after frequency hopping processing in a preset frequency domain when determining (502) that the UL data needs to be processed with frequency hopping processing according to the DCI, if the UL virtual resources allocated to the UE are located at UL sub-frames in a non-aggregation K of any wireless frame, and are located at the preset frequency domain; and

transmit (505) the UL data to the eNB utilizing the determined UL physical resources which are processed with the frequency hopping processing and used for transmitting the UL data;

wherein an aggregation K is formed in a type I UL sub-frame which indicates that the first CC and the second CC each have UL sub-frames in same sub-frame number, and a non-aggregation K is formed in a type II UL sub-frame which indicates that the first CC has an UL sub-frame and the second CC has a DL sub-frame in same sub-frame number; and

wherein the preset frequency domain is an overlapping area of a Physical Uplink Control Channel, PUCCH, area of UL sub-frames in the aggregation K and a Physical Uplink Shared Channel, PUSCH, area of sub-frames in the non-aggregation K.

5. The UE of claim 4, wherein to determine (502) whether the UL virtual resources allocated to the UE are located at the preset frequency domain the UE is further configured to:

determine whether a UL virtual resource block m allocated to the UE satisfies a condition $m < N_{RB}^{HO}/2$ or

$$m > N_{RB}^{UL} - \frac{N_{RB}^{HO}}{2} \quad \text{and}$$

determine that the UL virtual resources allocated to the UE locate at the preset frequency domain if the UL virtual resource block m satisfies the condition; otherwise determining that the UL virtual resources allocated to the UE do not locate at the preset frequency domain;

wherein $N_{RB}^{UL}$ is a total number of Resource Blocks, RBs, in a UL system bandwidth, $N_{RB}^{HO}$ is an offset of frequency hopping issued by the system, and m is a physical resource block number of the UL virtual resource block.

6. The UE of claim 1, wherein the UE is further configured to determine the UL physical resources used for transmitting the UL data after the frequency hopping processing in the preset frequency domain by:

$$n_{PRB}^{s2}(i) = N_{RB}^{UL} - 1 - n_{PRB}^{s1}(i)$$

wherein $n_{PRB}^{s2}(i)$ is a position of a UL physical resource which is used for transmitting the UL data after the frequency hopping processing, $n_{PRB}^{s1}(i)$ is a position of a UL virtual resource allocated to the UE, $N_{RB}^{UL}$ is a total number of RBs in the UL system bandwidth, and i is a number of the UL virtual resources allocated to the UE.

**Patentansprüche**

1. Verfahren zur Uplink-, UL-, Datenübertragung in einem drahtlosen Kommunikationssystem, wobei das Verfahren Folgendes umfasst:

Bestimmen (501) von virtuellen UL-Ressourcen durch die UE, die der UE durch einen Evolved Node B, eNB gemäß Downlink-Steuerinformationen (Downlink Control Information), DCI, zugewiesenen wurden und zur Planung von physischen UL-Ressourcen verwendet werden, die von dem eNB zu der UE gesendet werden, wobei ein erster Komponententräger, CC, und ein zweiter CC, die unterschiedliche Rahmenstrukturkonfigurationen aufweisen, für die UE konfiguriert sind;

Bestimmen (503, 504) der physischen UL-Ressourcen durch die UE, die zur Übertragung der UL-Daten nach der Frequenzsprungverarbeitung in einem voreingestellten Frequenzbereich verwendet werden, wenn bestimmt wird (502), dass die UL-Daten mit einer Frequenzsprungverarbeitung gemäß den DCI verarbeitet werden müssen, wenn sich die virtuellen UL-Ressourcen, die der UE zugewiesen sind, in UL-Unterrahmen in einer Nicht-Aggregation K eines beliebigen drahtlosen Rahmens befinden und sich bei dem voreingestellten Frequenzbereich befinden; und

Senden (505) der UL-Daten durch die UE zum eNB unter Verwendung der bestimmten physikalischen UL-Ressourcen, die mit der Frequenzsprungverarbeitung verarbeitet und zur Übertragung der UL-Daten verwendet werden;

wobei eine Aggregation K in einem Typ-I-UL-Unterrahmen gebildet wird, der anzeigt, dass der erste CC und der zweite CC jeweils UL-Unterrahmen in derselben Teilrahmennummer aufweisen, und wobei eine Nicht-Aggregation K in einem Typ-II-UL-Unterrahmen gebildet wird, der anzeigt, dass der erste CC einen UL-Unterrahmen aufweist und der zweite CC einen DL-Unterrahmen in derselben Teilrahmennummer aufweist, und

wobei der vorbestimmte Frequenzbereich ein überlappender Bereich eines physikalischen Uplink-Steuerkanal- (Physical Uplink Control Channel), PUCCH-, Bereichs von UL-Unterrahmen in der Aggregation K und eines gemeinsam genutzten physikalischen Uplink-Kanal- (Physical Uplink Shared Channel), PUSCH-, Bereichs von Unterrahmen in der Nicht-Aggregation K ist.

2. Verfahren nach Anspruch 1, das ferner das Bestimmen (502) umfasst, ob die virtuellen UL-Ressourcen, die der UE zugewiesenen wurden, bei dem voreingestellten Frequenzbereich angeordnet sind, wobei das Bestimmen durch Folgendes erfolgt:

Bestimmen, ob ein virtueller UL-Ressourcenblock m, der der UE zugewiesen ist, eine Bedingung

$$m < N_{RB}^{HO}/2$$

oder

$$m > N_{RB}^{UL} - \frac{N_{RB}^{HO}}{2}$$

erfüllt und

Bestimmen, dass die virtuellen UL-Ressourcen, die der UE zugewiesenen wurden, bei dem voreingestellten Frequenzbereich angeordnet sind, wenn der virtuelle UL-Ressourcenblock m die Bedingung erfüllt;

ansonsten Bestimmen, dass die virtuellen UL-Ressourcen, die der UE zugewiesenen wurden, bei dem voreingestellten Frequenzbereich nicht angeordnet sind;

wobei $N_{RB}^{UL}$ eine Gesamtanzahl von Ressourcenblöcken, RBs, in einer UL-Systembandbreite ist, $N_{RB}^{HO}$ ein Versatz des Frequenzsprungs ist, der von dem System ausgegeben wird, und m eine physikalische Ressourcenblocknummer des virtuellen UL-Ressourcenblocks ist.

3. Verfahren nach Anspruch 1, wobei das Bestimmen durch die UE der physikalischen UL-Ressourcen, die zur Übertragung der UL-Daten nach der Frequenzsprungverarbeitung in dem voreingestellten Frequenzbereich verwendet werden, Folgendes umfasst:

$$n_{PRB}^{s2}(i) = N_{RB}^{UL} - 1 - n_{PRB}^{s1}(i),$$

wobei $n_{PRB}^{s2}(i)$ eine Position einer physikalischen UL-Ressource ist, die zur Übertragung der UL-Daten nach der Frequenzsprungverarbeitung verwendet wird, $n_{PRB}^{s1}(i)$ eine Position einer virtuellen UL-Ressource ist, die der UE zugeordnet ist, $N_{RB}^{UL}$ eine Gesamtanhl von RBs in der UL-Systembandbreite ist und i eine Anzahl der virtuellen UL-Ressourcen ist, die der UE zugewiesen wurden.

4. Benutzervorrichtung (User Equipment - UE) für die Uplink-, UL-, Datenübertragung in einem drahtlosen Kommunikationssystem, wobei die UE für Folgendes konfiguriert ist:

Bestimmen (501) von virtuellen UL-Ressourcen, die der UE durch einen Evolved Node B, eNB gemäß Downlink-Steuerinformationen (Downlink Control Information), DCI, zugewiesenen wurden und zur Planung von physischen UL-Ressourcen verwendet werden, die von dem eNB zu der UE gesendet werden, wobei ein erster Komponententräger, CC, und ein zweiter CC, die unterschiedliche Rahmenstrukturkonfigurationen aufweisen, für die UE konfiguriert sind;
Bestimmen (503, 504) der physikalischen UL-Ressourcen, die zur Übertragung der UL-Daten nach der Frequenzsprungverarbeitung in einem voreingestellten Frequenzbereich verwendet werden, wenn bestimmt wird (502), dass die UL-Daten mit einer Frequenzsprungverarbeitung gemäß den DCI verarbeitet werden müssen, wenn sich die virtuellen UL-Ressourcen, die der UE zugewiesen sind, in UL-Unterrahmen in einer Nicht-Aggregation K eines beliebigen drahtlosen Rahmens befinden und sich bei dem voreingestellten Frequenzbereich befinden; und
Senden (505) der UL-Daten zum eNB unter Verwendung der bestimmten physikalischen UL-Ressourcen, die mit der Frequenzsprungverarbeitung verarbeitet und zur Übertragung der UL-Daten verwendet werden;
wobei eine Aggregation K in einem Typ-I-UL-Unterrahmen gebildet wird, der anzeigt, dass der erste CC und der zweite CC jeweils UL-Unterrahmen in derselben Teilrahmennummer aufweisen, und wobei eine Nicht-Aggregation K in einem Typ-II-UL-Unterrahmen gebildet wird, der anzeigt, dass der erste CC einen UL-Unterrahmen aufweist und der zweite CC einen DL-Unterrahmen in derselben Teilrahmennummer aufweist, und wobei der vorbestimmte Frequenzbereich ein überlappender Bereich eines physikalischen Uplink-Steuerkanal- (Physical Uplink Control Channel), PUCCH-, Bereichs von UL-Unterrahmen in der Aggregation K und eines gemeinsam genutzten physikalischen Uplink-Kanal-, PUSCH-, Bereichs von Unterrahmen in der Nicht-Aggregation K ist.

5. UE nach Anspruch 4, wobei die UE zum Bestimmen (502), ob die virtuellen UL-Ressourcen, die der UE zugewiesenen wurden, bei dem voreingestellten Frequenzbereich angeordnet sind, ferner für Folgendes konfiguriert ist:

Bestimmen, ob ein virtueller UL-Ressourcenblock m, der der UE zugewiesen ist, eine Bedingung

$$m < N_{RB}^{HO}/2 \text{ oder } m > N_{RB}^{UL} - \frac{N_{RB}^{HO}}{2} \text{ erfüllt; und}$$

Bestimmen, dass die virtuellen UL-Ressourcen, die der UE zugewiesenen wurden, bei dem voreingestellten Frequenzbereich angeordnet sind, wenn der virtuelle UL-Ressourcenblock m die Bedingung erfüllt; ansonsten Bestimmen, dass die virtuellen UL-Ressourcen, die der UE zugewiesenen wurden, bei dem voreingestellten Frequenzbereich nicht angeordnet sind;

wobei $N_{RB}^{UL}$ eine Gesamtanzahl von Ressourcenblöcken, RBs, in einer UL-Systembandbreite ist, $N_{RB}^{HO}$ ein Versatz des Frequenzsprungs ist, der von dem System ausgegeben wird, und m eine physikalische Ressourcenblocknummer des virtuellen UL-Ressourcenblocks ist.

6. UE nach Anspruch 1, wobei die UE ferner für Folgendes konfiguriert ist:

Bestimmen der physikalischen UL-Ressourcen, die zur Übertragung der UL-Daten nach der Frequenzsprungverarbeitung in dem voreingestellten Frequenzbereich verwendet werden, durch:

$$n_{PRB}^{s2}(i) = N_{RB}^{UL} - 1 - n_{PRB}^{s1}(i)^5$$

wobei $n_{PRB}^{s2}(i)$ eine Position einer physikalischen UL-Ressource ist, die zur Übertragung der UL-Daten nach der Frequenzsprungverarbeitung verwendet wird, $n_{PRB}^{s1}(i)$ eine Position einer virtuellen UL-Ressource ist, die der UE zugewiesen ist, $N_{RB}^{UL}$ eine Gesamtanzahl von RBs in der UL-Systembandbreite ist und i eine Anzahl der virtuellen UL-Ressourcen ist, die der UE zugewiesen sind.

**Revendications**

1. Un procédé de transmission de données en liaison montante, UL, dans un système de communication sans fil, le procédé comprenant :

   la détermination (501), par l'UE, de ressources virtuelles UL attribuées à l'UE par un noeud B évolué, eNB, en fonction d'informations de commande en liaison descendante, DCI, utilisées pour la planification de ressources physiques UL envoyées du noeud eNB à l'UE, où un premier support de composant, CC, et un deuxième CC possédant des configurations de structure de trame différentes sont configurés pour l'UE,
   la détermination (503, 504), par l'UE, des ressources physiques UL utilisées pour la transmission des données UL après un traitement de saut de fréquences dans un domaine fréquentiel prédéfini en cas de détermination (502) que les données UL doivent être traitées avec un traitement de saut de fréquences conformément aux DCI, si les ressources virtuelles UL attribuées à l'UE se trouvent au niveau de sous-trames UL dans une non-agrégation K d'une trame sans fil quelconque et se trouvent au niveau du domaine fréquentiel prédéfini, et
   la transmission (505), par l'UE, des données UL au noeud eNB au moyen des ressources physiques UL déterminées qui sont traitées avec le traitement de saut de fréquences et utilisées pour la transmission des données UL,

   où une agrégation K est formée dans une sous-trame UL de type I qui indique que le premier CC et le deuxième CC possèdent chacun des sous-trames UL dans un même nombre de sous-trames, et une non-agrégation K est formée dans une sous-trame UL de type II qui indique que le premier CC possède une sous-trame UL et le deuxième CC possède une sous-trame DL dans un même nombre de sous-trames, et
   où le domaine fréquentiel prédéfini est une zone de chevauchement d'une zone de canal de commande en liaison montante physique, PUCCH, de sous-trames UL dans l'agrégation K et une zone de canal partagé en liaison montante physique, PUSCH, de sous-trames dans la non-agrégation K.

2. Le procédé selon la Revendication 1, comprenant en outre la détermination (502) si les ressources virtuelles UL attribuées à l'UE se trouvent au niveau du domaine fréquentiel prédéfini par :

   la détermination si un bloc de ressource virtuelle UL m attribué à l'UE satisfait une condition

$$m < N_{RB}^{HO}/2$$

   ou,

$$m > N_{RB}^{UL} - \frac{N_{RB}^{HO}}{2}$$

   et

   la détermination que les ressources virtuelles UL attribuées à l'UE se trouvent au niveau du domaine fréquentiel prédéfini si le bloc de ressource virtuelle UL m satisfait la condition ; dans le cas contraire la détermination que les ressources virtuelles UL attribuées à l'UE ne se trouvent pas au niveau du domaine fréquentiel prédéfini,

où $N_{RB}^{UL}$ est un nombre total de blocs de ressource, RB, dans une bande passante système UL, $N_{RB}^{HO}$ est un décalage de saut de fréquences émis par le système et m est un nombre de blocs de ressource physique du bloc de ressource virtuelle UL.

**3.** Le procédé selon la Revendication 1, où la détermination, par l'UE, des ressources physiques UL utilisées pour la transmission des données UL après le traitement de saut de fréquences dans le domaine fréquentiel prédéfini comprend :

$$n_{PRB}^{s2}(i)=N_{RB}^{UL}-1-n_{PRB}^{s1}(i),$$

où $n_{PRB}^{s2}(i)$ est une position d'une ressource physique UL qui est utilisée pour la transmission des données UL après le traitement de saut de fréquences, $n_{PRB}^{s1}(i)$ est une position d'une ressource virtuelle UL attribuée à l'UE, $N_{RB}^{UL}$ est un nombre total de RB dans la bande passante système UL et i est un nombre des ressources virtuelles UL attribuées à l'UE.

**4.** Un équipement d'utilisateur, UE, destiné à une transmission de données en liaison montante, UL, dans un système de communication sans fil, l'UE étant configuré de façon à :

déterminer (501) des ressources virtuelles UL attribuées à l'UE par un noeud B évolué, eNB, en fonction d'informations de commande en liaison descendante, DCI, utilisées pour la planification de ressources physiques UL envoyées du noeud eNB à l'UE, où un premier support de composant, CC, et un deuxième CC possédant des configurations de structure de trame différentes sont configurés pour l'UE,
déterminer (503, 504) les ressources physiques UL utilisées pour la transmission des données UL après un traitement de saut de fréquences dans un domaine fréquentiel prédéfini en cas de détermination (502) que les données UL doivent être traitées avec un traitement de saut de fréquences conformément aux DCI, si les ressources virtuelles UL attribuées à l'UE se trouvent au niveau de sous-trames UL dans une non-agrégation K d'une trame sans fil quelconque et se trouvent au niveau du domaine fréquentiel prédéfini, et
transmettre (505) les données UL au noeud eNB au moyen des ressources physiques UL déterminées qui sont traitées avec le traitement de saut de fréquences et utilisées pour la transmission des données UL,

où une agrégation K est formée dans une sous-trame UL de type I qui indique que le premier CC et le deuxième CC possèdent chacun des sous-trames UL dans un même nombre de sous-trames, et une non-agrégation K est formée dans une sous-trame UL de type II qui indique que le premier CC possède une sous-trame UL et le deuxième CC possède une sous-trame DL dans un même nombre de sous-trames, et
où le domaine fréquentiel prédéfini est une zone de chevauchement d'une zone de canal de commande en liaison montante physique, PUCCH, de sous-trames UL dans l'agrégation K et une zone de canal partagé en liaison montante physique, PUSCH, de sous-trames dans la non-agrégation K.

**5.** L'UE selon la Revendication 4, où, afin de déterminer (502) si les ressources virtuelles UL attribuées à l'UE se trouvent au niveau du domaine fréquentiel prédéfini, l'UE est configuré en outre de façon à :

déterminer si un bloc de ressource virtuelle UL m attribué à l'UE satisfait une condition $m<N_{RB}^{HO}/2$ ou

$$m>N_{RB}^{UL}-\frac{N_{RB}^{HO}}{2},$$

déterminer que les ressources virtuelles UL attribuées à l'UE se trouvent au niveau du domaine fréquentiel prédéfini si le bloc de ressource virtuelle UL m satisfait la condition ; dans le cas contraire la détermination que les ressources virtuelles UL attribuées à l'UE ne se trouvent pas au niveau du domaine fréquentiel prédéfini,

ou $N_{RB}^{UL}$ est un nombre total de blocs de ressource, RB, dans une bande passante système UL, $N_{RB}^{HO}$ est un décalage de saut de fréquences émis par le système et m est un nombre de blocs de ressource physique du bloc de ressource virtuelle UL.

6. L'UE selon la Revendication 1, où l'UE est configuré en outre de façon à déterminer les ressources physiques UL utilisées pour la transmission des données UL après le traitement de saut de fréquences dans le domaine fréquentiel prédéfini par :

$$n_{PRB}^{s2}(i) = N_{RB}^{UL} - 1 - n_{PRB}^{s1}(i)$$

où $n_{PRB}^{s2}(i)$ est une position d'une ressource physique UL qui est utilisée pour la transmission des données UL après le traitement de saut de fréquences, $n_{PRB}^{s1}(i)$ est une position d'une ressource virtuelle UL attribuées à l'UE, $N_{RB}^{UL}$ est un nombre total de RB dans la bande passante système UL et i est un nombre des ressources virtuelles UL attribuées à l'UE.

[Fig. 1]

[Fig. 2]

[Fig. 3]

[Fig. 4]

[Fig. 5]

A UE determines uplink virtual resources allocated to the UE by the eNB according to the UE by the eNB according to its Downlink Control Information (DCI). The DCI is allocated to the UE by the eNB and used for scheduling UL physical resources — 501

It is determined whether the UL virtual resources locate at the PUSCH R1 area of type II UL sub-frames? — 502

NO

YES

When the UL data needs to be processed with the frequency hopping processing according to the configurations of the system, the UE determines the positions of the UL physical resources which are processed with the frequency hopping processing and used for transmitting the UL data in the PUSCH R1 area of the type II sub-frames according to the positions of the UL virtual resources allocated to the UE — 503

When the UL data needs to be processed with the frequency hopping processing according to the configurations of the system, the frequency hopping processing is processed according to the existing methods, and the positions of the UL physical resources for transmitting the UL data are determined — 504

The UE bears the UL data with the determined UL physical resources which are processed with the frequency hopping processing and used for transmitting the UL data and feeds the UL data back to the eNB — 505

[Fig. 6]

configuration 2    D  S    U  D  D  D  S    U  D  D    SCC
                   0  1    2  3  4  5  6    7  8  9

configuration 1    D  S    U  U  D  D  S    U  U  D    PCC

1 slot
1 subframe

Sub-frame 2
virtual resource
blocks

Sub-    Sub-    Sub-    Sub-
frequency frequency frequency frequency
band 0  band 1  band 2  band 3

1 slot
1 subframe

Sub-    Sub-    Sub-    Sub-
frequency frequency frequency frequency
band 0  band 1  band 2  band 3

Sub-frame 2
virtual resource
blocks

PUSCH R₁ area          PUSCH R₁ area

Sub-frame 2
physical resource
blocks

PUSCH R₁ area          PUSCH R₁ area

Sub-frame 3
physical resource
blocks

U    Type I UL data sub-frame

U    Type II UL data sub-frame

EP 2 759 084 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102075949 A
- US 2011170499 A1
- US 2010329220 A1
- KR 20110010683 A
- US 2010085956 A1
- US 2010189032 A1

**Non-patent literature cited in the description**

- HARQ and Cross-carrier Scheduling for Different TOO Configurations. 3GPP Draft; R2-112798, 3rd Generation Partnership Project (3GPP). Mobile Competence Centre, 03 May 2011, vol. RAN WG2